# EUROPEAN PATENT APPLICATION

(11) **EP 4 733 138 A1**
(43) Date of publication of application: **29.04.2026**
(21) Application number: 24208975.3
(22) Date of filing: 25.10.2024
(51) Int. Cl.: B60R 11/04

(54) **MOUNTING BRACKET FOR A DRIVER ASSIST SYSTEM, MOUNTING ARRANGEMENT AND VEHICLE DRIVER ASSIST SYSTEM**

(71) Applicant: ZF Friedrichshafen AG, 88046 Friedrichshafen (DE); ZF Automotive Systems Poland Sp. z.o.o., 42-202 Czestochowa (PL)
(72) Inventor: Wiernik, Marcin, 98-300 Wielu (PL)
(74) Representative: Ege Lee & Roider Patentanwälte

(57) **Abstract**

A mounting bracket (100) for a driver assist system (102), the mounting bracket (100) connectable with a vehicle and comprising: a first arm (118) extending from a sidewall (110) of the mounting bracket (100); a second arm (120) extending from the sidewall (110) of the mounting bracket (100); and a channel (112) configured to receive a tab (116) of a camera housing (106), the channel (112) being at least partially defined by the first arm (118) and the second arm (120) , the first arm (118) having an end surface (124) and the second arm (120) having a supporting surface (126) to support the tab (116) of the camera housing (106), the end surface (124) of the first arm (118) and the supporting surface (126) of the second arm (120) at least partially defining an insertion opening (128) that faces generally downwardly, wherein the second arm (120) is configured to press the tab (116) of the camera housing (106) against a supporting surface (130) of the first arm (118) when the camera housing (106) is connected to the mounting bracket (100), as well as a mounting arrangement (104) and a vehicle driver assist system (102) comprising a mounting bracket (100) or a mounting arrangement (104).

## Description

### Technical Field

The present disclosure generally relates to a mounting bracket for a driver assist system. In particular, a mounting bracket for a driver assist system that is mountable to a vehicle, particularly to a vehicle window such as a windshield, is described. The present disclosure further relates to a mounting arrangement and a vehicle driver assist system comprising the mounting bracket.

### Background

Vehicle driver assist systems that use a camera to monitor the environment surrounding the vehicle are known. For example, one particular type of driver assist system monitors the area in front of the vehicle and uses a forward looking camera. It is common to mount a forward looking driver assist system to the front windshield of the vehicle. Such a forward looking driver assist system can aid a driver in the operation of a motor vehicle by providing operational information such as a potential collision, lane or roadway departure, location of pedestrians, road sign information, etc. Driver assist systems could also be mounted to other vehicle locations such as the rear window. Data from the driver assist system is provided to other vehicle systems to provide the driver with a warning, haptic or tactile feedback, and/or autonomous control of the vehicle.

Existing mounting brackets do not always allow for perfect camera positioning and fixation. That is, some minor camera shifts are still possible, which may result in subjecting the driver assist system to vibrations and looseness, which may result in failures of the driver assist system.

### Summary

Accordingly, there is a need for a mounting bracket capable of fixing a camera housing of the driver assist system in a desired position in the vehicle for ensuring accurate camera positioning and protecting against potential vibrations or looseness that may degrade or distort images from the camera.

The object is solved with a mounting bracket having the features of claim 1. Further, the object is solved with a mounting arrangement having the features of claim 14. Moreover, the object is solved with a vehicle driver assist system having the features of claim 15. Advantageous embodiments and/or further embodiments are the subject of the dependent claims, the description and/or the accompanying figures.

According to an aspect, there is provided a mounting bracket for a driver assist system. The driver assist system can be a vehicle driver assist system. The mounting bracket is connectable with a vehicle. In one implementation, the mounting bracket is connectable with a window, for example a windshield, of the vehicle. The mounting bracket includes a first arm extending from a sidewall of the mounting bracket. Further, the mounting bracket includes a second arm extending from the sidewall of the mounting bracket. In addition, the mounting bracket includes a channel configured to receive a tab of a camera housing. The mounting bracket may have one, two or more channels for receiving at least one tab of the camera housing. In one realization, the mounting bracket may have two channels on opposite sides, for example on the left and right side, of the mounting bracket, wherein each of which may receive a tab of the camera housing. The channel of the mounting bracket is at least partially defined by the first arm and the second arm. In case the mounting bracket has more than one channel, each channel of the mounting bracket is at least partially defined by a respective first arm and second arm.

The first arm has an end surface. The first arm may substantially face and/or extend toward a rear end of the mounting bracket. The second arm has a supporting surface to support the tab of the camera housing. The end surface of the first arm and the supporting surface of the second arm at least partially define an insertion opening. The insertion opening faces generally downwardly. The first arm can have a supporting surface to support the tab of the camera housing. The second arm is configured to press the tab of the camera housing against the supporting surface of the first arm when the camera housing is connected to the mounting bracket. Further, the second arm may substantially face and/or extend downwardly.

In one implementation, the mounting bracket comprises a third arm extending from the sidewall of the mounting bracket. The third arm may substantially face and/or extend downwardly. Further, the third arm may have a supporting surface to support the tab of the camera housing. The sidewall can have a supporting surface to support the tab of the camera housing. The third arm can be configured to press the tab of the camera housing against the supporting surface of the sidewall when the camera housing is connected to the mounting bracket.

In one realization, the supporting surface of the third arm and the supporting surface of the sidewall may face to each other. Further, the supporting surface of the third arm and the supporting surface of the sidewall may generally be parallel to each other. The supporting surface of the sidewall may extend transverse, for example perpendicular, to the supporting surface of the first arm. In one realization, the supporting surface of the sidewall may extend from the supporting surface of the first arm. The supporting surface of the second arm and the supporting surface of the first arm may generally be parallel to each other. In one implementation, the supporting surface of the second arm and the supporting surface of the first arm may substantially face to each other. The supporting surface of the third arm and the supporting surface of the second may extend at an angle to each other and/or may extend transverse, for example perpendicular, to each other. In one realization, the supporting surface of the second arm and the supporting surface of the third arm may substantially define a V-shaped structure or V-shaped notch. Preferably, the supporting surface of the second arm and the supporting surface of the third arm may be perpendicular to each other and/or may substantially reflect the shape of at least a portion of the mating camera housing tab. All supporting surfaces or at least supporting surfaces that are associated to each other may form an engagement structure, retention structure and/or constraining structure for accommodating and/or constraining the tab of the camera housing therebetween.

The second arm can have a guide surface. The guide surface of the second arm can be configured to guide the tab of the camera housing into the channel. Further, the guide surface of the second arm can extend from the supporting surface of the second arm. Moreover, the third arm can have a guide surface. The guide surface of the third arm can be configured to guide the tab of the camera housing into the channel. Further, the guide surface of the third arm can extend from the supporting surface of the third arm. The guide surface of the second arm and the guide surface of the third arm may generally be parallel to each other. In one realization, the guide surface of the second arm and the guide surface of the third arm can substantially be arranged in a common plane and/or substantially define a common guide surface.

In one implementation, the second arm can be flexible and/or the third arm can be flexible. The second arm may be a resilient element configured to apply a force to the tab of the camera housing to urge the tab of the camera housing against the supporting surface of the first arm. Further, the third arm may be a resilient element configured to apply a force to the tab of the camera housing to urge the tab of the camera housing against the supporting surface of the sidewall. Moreover, the first arm, the second arm and/or the third arm can be a front arm, for example a front locking arm.

The supporting surface of the second arm and/or the supporting surface of the third arm may be configured to be tight fit to the tab of the camera housing when the camera housing is connected to the mounting bracket after pivoting the camera housing and the tab relative to the mounting bracket. In one implementation, the supporting surface of the second arm and/or the supporting surface of the third arm may be configured to have an interference fit with the tab of the camera housing when the camera housing is connected to the mounting bracket, particularly after pivoting the camera housing and the tab relative to the mounting bracket.

In a further implementation, the sidewall can have a curved surface. The curved surface of the sidewall may face toward the insertion opening. Further, the curved surface of the sidewall may extend from the supporting surface on the sidewall. The guide surface of the second arm and the curved surface of the sidewall can substantially define a wedged shaped structure.

Moreover, the first arm may have a centering portion. The centering portion of the first arm may be configured to center the camera housing relative to the mounting bracket. The centering portion may be arranged next to the end surface of the first arm. In one realization, the centering portion has a supporting surface to support the tab of the camera housing. The supporting surface of the centering portion may extend transverse, for example perpendicular, to the supporting surface of the second arm and/or to the supporting surface of the third arm. Moreover, the first arm and/or the centering portion may have at least one guide surface. The at least one guide surface of the first arm and centering portion, respectively, is configured to guide the tab of the camera housing into the channel. For example, the at least one guide surface can be configured as lead-in chamfer. In one realization, the mounting bracket may have two centering portions arranged on opposite sides of the mounting bracket. Each centering portion may have a supporting surface. The two supporting surfaces may face to each other and/or may be parallel to each other. Further, at least one of the centering portions or at least one of the supporting surfaces of the centering portions may have a rib, for example a crush rib. The rib can be configured to have a tight and/or interference fit with the tab of the camera housing when the camera housing is connected to the mounting bracket. The camera housing can be centered in position by constraining two opposite tabs of the camera housing between the two supporting surfaces of the opposite centering portions of the mounting bracket.

The mounting bracket may have at least one rear locking arm. In one implementation, the mounting bracket may have two rear locking arms, for example on opposite sides, e.g., on the left and right side, of the mounting bracket. The at least one rear locking arm of the mounting bracket can be configured to lock onto at least one rearward tab of the camera housing. In one implementation, the rear locking arm can have a detent that is configured to engage the rearward tab of the camera housing. The detent may have an upper surface that can engage a lower surface on the rearward tab of the camera housing. The upper surface on the detent may extend generally perpendicular to a vertical surface on the rear locking arm. The lower surface on the rearward tab of the camera housing may extend generally perpendicular to a vertical surface of the camera housing. Thus, the upper surface on the detent of the rear locking arm may extend generally parallel to the lower surface on the rearward tab of the camera housing when the camera housing is connected to the mounting bracket. Further, the rear locking arm may be flexible and/or configured as a spring member.

According to a further aspect, there is provided a mounting arrangement for a driver assist system. The mounting arrangement comprises a mounting bracket as generally described above and/or hereinafter. Further, the mounting arrangement comprises a camera housing. The camera housing may be configured to mount a camera therein. In one implementation, the camera housing can have the camera mounted therein. Further, the camera housing has at least one tab. The at least one tab can be a forward tab. In one implementation, the camera housing may have two tabs on opposite sides of the camera housing. For example, the camera housing may have a forward tab on the left side and a forward tab on the right side of the camera housing. The at least one tab of the camera housing is slidable into the channel in the mounting bracket through the insertion opening to connect the camera housing to the mounting bracket. The camera housing and the tab are pivotal relative to the mounting bracket after the tab has slid into the channel, wherein the tab at least engages the supporting surface of the first arm and the supporting surface of the second arm when the camera housing is connected to the mounting bracket.

In one realization, the tab of the camera housing can at least engage the supporting surface of the first arm, the supporting surface of the second arm, the supporting surface of the third arm and the supporting surface of the sidewall when the camera housing is connected to the mounting bracket. In addition, the tab of the camera housing may engage the supporting surface of the centering portion when the camera housing is connected to the mounting bracket. In one implementation, the tab of the camera housing may engage the rib of the supporting surface of the centering portion when the camera housing is connected to the mounting bracket.

The at least one tab of the camera housing may be configured to be tight fit to the supporting surface of the second arm and/or the supporting surface of the third arm when the camera housing is connected to the mounting bracket after pivoting the camera housing and the tab relative to the mounting bracket. Further, the at least one tab of the camera housing may have an interference fit with the supporting surface of the second arm and/or the supporting surface of the third arm when the camera housing is connected to the mounting bracket, particularly after pivoting the camera housing and the tab relative to the mounting bracket.

In one implementation, the at least one tab of the camera housing may substantially have a rectangular shape. The at least one tab may have an upper surface and/or a lower surface. The lower surface of the tab can be configured to engage the supporting surface of the first arm, particularly when the camera housing is connected to the mounting bracket and/or after pivoting the camera housing and the tab relative to the mounting bracket. The upper surface of the tab can be configured to engage the supporting surface of the second arm, particularly when the camera housing is connected to the mounting bracket and/or after pivoting the camera housing and the tab relative to the mounting bracket. In one realization, the at least one tab may have a forward surface and/or a rearward surface. The forward surface of the tab can be configured to engage the supporting surface of the sidewall, particularly when the camera housing is connected to the mounting bracket and/or after pivoting the camera housing and the tab relative to the mounting bracket. The rearward surface of the tab can be configured to engage the supporting surface of the third arm, particularly when the camera housing is connected to the mounting bracket and/or after pivoting the camera housing and the tab relative to the mounting bracket. Moreover, the at least one tab may have a side surface. The side surface of the tab can be configured to engage the supporting surface of the centering portion, particularly when the camera housing is connected to the mounting bracket and/or after pivoting the camera housing and the tab relative to the mounting bracket. In one implementation, the side surface of the tab can be configured to engage the rib of the supporting surface of the centering portion, particularly when the camera housing is connected to the mounting bracket and/or after pivoting the camera housing and the tab relative to the mounting bracket.

Moreover, the camera housing may have at least one rearward tab. In one implementation, the camera housing may have two rearward tabs, for example on opposite sides, e.g., on the left and right side, of the camera housing. The at least one rearward tab of the camera housing can be configured to engage the at least one rear locking arm of the mounting bracket. The rearward tab on the camera housing may be configured to snap into the rear locking arm of the mounting bracket when the camera housing pivots relative to the mounting bracket.

According to a further aspect, there is provided a vehicle driver assist system. The vehicle driver assist system comprises a mounting bracket as generally described above and/or hereinafter or a mounting arrangement as generally described above and/or hereinafter. The vehicle driver assist system can be configured to use a camera for aiding a driver in the operation of the vehicle. Moreover, the vehicle driver assist system can be configured as a forward looking system for monitoring the environment forward of the vehicle or as a rearward looking system for monitoring the environment rearward of the vehicle.

### Brief Description of the Drawings

Further details, advantages and aspects of the present disclosure will become apparent from the following embodiments taken in conjunction with the drawings, wherein:
- Fig. 1: shows a schematic side view of an embodiment of a mounting bracket for a driver assist system;
- Fig. 2: shows an enlarged view of the insertion of the tab of the camera housing into the channel of the mounting bracket of Fig. 1;
- Fig. 3: shows an enlarged view of a portion of the mounting bracket of Fig. 1;
- Fig. 4: shows another enlarged view of the portion of the mounting bracket of Fig. 1;
- Fig. 5: shows another enlarged view of the portion of the mounting bracket of Fig. 1;
- Fig. 6: shows another enlarged sectional view of the insertion of the tab of the camera housing into the channel of the mounting bracket of Fig. 1;
- Fig. 7: shows another enlarged sectional view of the portion of the mounting bracket of Fig. 1;
- Fig. 8: shows another enlarged sectional view of the portion of the mounting bracket of Fig. 1; and
- Fig. 9: shows an enlarged view of an embodiment of a crush rib on a centering portion of the mounting bracket of Fig. 1.

### Detailed Description

In the following, embodiments of a mounting bracket for a driver assist system will be described. The same reference numerals will be used to denote the same or similar structural features.

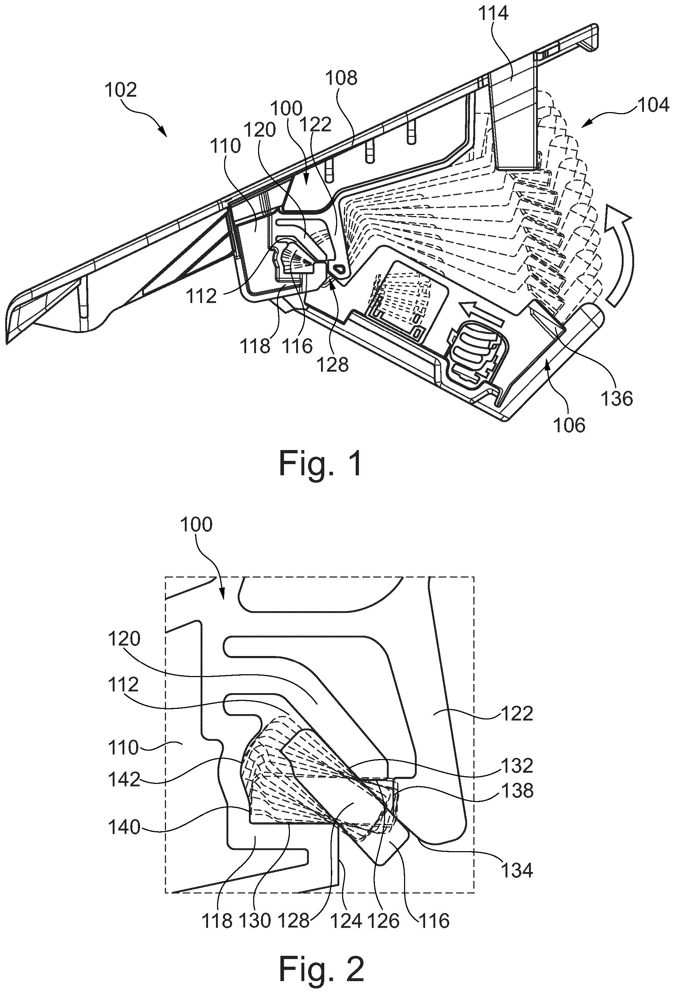

A schematic side view of an embodiment of a mounting bracket 100 for a driver assist system 102 is described and is shown in Figs. 1 to 8. In the present embodiment, the driver assist system 102 is a vehicle driver assist system using a camera for aiding a driver in the operation of the motor vehicle. As shown in Fig. 1, a mounting arrangement 104 comprises a camera housing 106 configured to mount a camera (in Fig. 1 not shown) therein, and the mounting bracket 100 connectable with the vehicle. The camera or other sensor can be mounted within the camera housing 106. The camera can be operatively connected to data processing circuitry (not shown) within the camera housing 106 for processing any image within the field of view of the camera. The circuitry within the camera housing 106 can be connectable with other vehicle systems. In the present embodiment, the mounting bracket 100 is connectable with a window of the vehicle, such as a front windshield. The driver assist system 102 is thus configured as a forward looking system, though it is understood that other systems may utilize the features of the present embodiment. The driver assist system 102 views the environment outside of the vehicle and analyzes monitored information for vehicle functions, such as lane keeping, roadway departures, pedestrian information, road sign information, etc. The analyzed information is then further processed and used by vehicle control systems and/or warning systems. Alternatively, the mounting bracket 100 can also be applicable to other driver assist systems such as a rearward facing system for monitoring the environment rearward of the vehicle.

The mounting bracket 100 is connectable to the window in any desired manner. The mounting bracket 100 may have a mounting portion 108 that is connectable to the window and at least one sidewall 110 that extends from the mounting portion 108 away from the window, particularly when the mounting bracket 100 is connected to the window. The mounting bracket 100 may have two sidewalls 110 that extend on opposite sides of mounting bracket 100 and at least partially covering the camera housing 106 when the camera housing 106 is connected to the mounting bracket 100.

The mounting bracket 100 includes a channel 112 or slot. As shown in Figs. 1 to 5, the channel 112 is formed in the sidewall 110 and is configured as a forward channel. The mounting bracket 100 may have two forward channels 112, for example on opposite sides of the mounting bracket 100. However, it is also contemplated that the mounting bracket 100 may include any desired number of forward channels 112. Further, the mounting bracket 100 has at least one rear locking arm 114. The mounting bracket 100 may have two rear locking arms 114, however, it is also contemplated that the mounting bracket 100 may include any number of rear locking arms 114.

The camera housing 106 has at least one tab 116. The at least on tab 116 extends from the camera housing 106 and is configured as a forward tab. The camera housing 106 may have two forward tabs 116 extending from opposite sides of the camera housing 106. The channel 112 of the mounting bracket 100 is configured to receive the tab 116 of the camera housing 106.

As shown in Figs. 1 to 5, the mounting bracket comprises a first arm 118, a second arm 120 and a third arm 122. Each of the first arm 118, the second arm 120 and the third arm 122 extends from the sidewall 110 of the mounting bracket 100. The channel 112 of the mounting bracket 100 is at least partially defined by the first arm 118 and the second arm 120. The second arm 120 and the third arm 122 may be flexible arms. In the present embodiment, each of the first arm 118, the second arm 120 and the third arm 122 is a front arm, such as a front locking arm. As shown in Figs. 2 to 5, the first arm 118 has an end surface 124 and the second arm 120 has a supporting surface 126. The supporting surface 126 of the second arm is configured to support the tab 116 of the camera housing 106. The end surface 124 of the first arm 118 and the supporting surface 126 of the second arm 120 at least partially define an insertion opening 128 that faces generally downwardly. Moreover, the first arm 118 has a supporting surface 130 configured to support the tab 116 of the camera housing 106. The second arm 120 is configured to press the tab 116 of the camera housing 106 against the supporting surface 130 of the first arm 118 when the camera housing 106 is connected to the mounting bracket 100.

As shown in Figs. 1 and 2, the tab 116 of the housing 106 is slidable into the channel 112 in the mounting bracket 100 through the insertion opening 128 to connect the camera housing 106 to the mounting bracket 100 (in Fig. 1 illustrated with the arrow pointing to the top left). The tab 116 of the camera housing 106 is configured to slide on a guide surface 132 of the second arm 120 and a guide surface 134 of the third arm 122. The camera housing 106 and the tab 116 are pivotal relative to the mounting bracket 100 (in Fig. 1 illustrated with the curved arrow pointing to the top) after the tab 116 has slid into the channel 122. When the camera housing 106 is connected to the mounting bracket 100, the tab 116 at least engages the supporting surface 130 of the first arm 118 and the supporting surface 126 of the second arm 120. Thus, the assembly of the camera housing 106 to the mounting bracket 100 can be done by forward movement of the camera housing 106 such that the tab 116 slides into the channel 112 of the mounting bracket 100 in first step and then rotation of the camera housing 106.

After the mounting bracket 100 is secured to the window or windshield, the camera housing 106 is snapped into the mounting bracket 100 by first inserting the tab 116 into the associated channel 112 of the mounting bracket 106 and then pivoting the rear end of the camera housing 106 upwards into engagement with the rear locking arm 114 of the mounting bracket 100. The rear locking arm 114 engages, for example locks onto, an associated rearward tab 136 of the camera housing 106 as shown in Fig. 1, thereby securing the camera housing 106 into the mounting bracket 100. The camera housing 106 may have two rearward tabs 136 that extend from opposite sides of the camera housing 106.

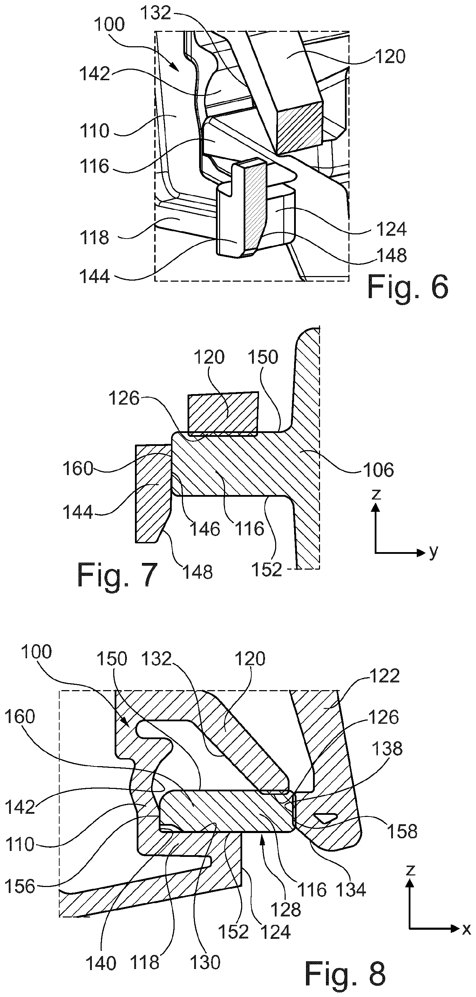

As shown in Figs. 2 to 5 and 8, the third arm 122 has a supporting surface 138 configured to support the tab 116 of the camera housing 106. Further, the sidewall 110 has also a supporting surface 140 that is configured to support the tab 116 of the camera housing 106. The supporting surface 138 of the third arm 122 and the supporting surface 140 of the sidewall 110 face to each other. Moreover, the supporting surface 140 of the sidewall 110 extends transverse, in the present embodiment as shown in Figs. 1 to 8 perpendicular, to and from the supporting surface 130 of the first arm 118. In addition, the supporting surface 126 of the second arm 120 and the supporting surface 138 of the third arm 122 extend transverse, in particular perpendicular, to each other. The supporting surface 126 of the second arm 120 and the supporting surface 138 of the third arm 122 may substantially define a V-shaped notch structure. Preferably, as shown in Figs. 2 and 8, the supporting surface 126 of the second arm 120 and the supporting surface 138 of the third arm 122 together substantially reflect the shape of at least a portion of the tab 116 of the camera housing 106. As illustrated in Figs. 2 and 8, the third arm 122 is configured to press the tab 116 of the camera housing 106 against the supporting surface 140 of the sidewall 110 when the camera housing 106 is connected to the mounting bracket 100, while the second arm 120 presses the tab 116 of the camera housing 106 against the supporting surface 130 of the first arm 118.

Particularly, second arm 120 is a resilient element configured to apply a force to the tab 116 of the camera housing 106 to urge the tab 116 of the camera housing 106 against the supporting surface 130 of the first arm 118. Further, the third arm 122 is a resilient element configured to apply a force to the tab 116 of the camera housing 106 to urge the tab 116 of the camera housing 106 against the supporting surface 140 of the sidewall 110. As shown in Fig. 1 and 2, the tab 116 of the camera housing 106 is inserted into the insertion opening 128 with the rearward tab 136 spaced from the rear locking arm 114. The guide surface 134 of the third arm 122 and the guide surface 132 of the second arm 120 guide insertion of the tab 116 into the channel 112. The tab 116 may be inserted into the channel 112 until the tab 116 abuts against a curved surface 142 of the sidewall 110. The curved surface 142 of the sidewall 110 extends from the supporting surface 140 of the sidewall 110 and faces toward the insertion opening 128.

After insertion of the tab 116 into the channel 112, the camera housing 106 may be pivoted relative to the mounting bracket 100 from the position shown in Fig. 1 illustrated with sold lines of the camera housing 106 toward the position shown in Fig. 1 illustrated with dashed lines of the camera housing 106 until it is snaped into the rear locking arm 114. The rearward tab 136 of the camera housing 106 moves toward the rear locking arm 114 as the camera housing 106 is pivoted relative to the mounting bracket 100. The camera housing 106 is pivoted until the tab 116 engages and tight fits between the supporting surface 130 of the first arm 118 and supporting surface 126 of the second arm 120 as well as between the supporting surface 140 of the sidewall 110 and supporting surface 138 of the third arm 122. The tab 116 of the camera housing 106 may be spaced from the curved surface 142 of the sidewall 110 when the camera housing 106 is pivoting relative to the mounting bracket 100 until the tab 116 engages the supporting surface 130 of the first arm 118 and the supporting surface 126 of the second arm 120 and/or the supporting surface 140 of the sidewall 110. As shown in Figs. 7 and 8, the supporting surface 126 of the second arm 120 and the supporting surface 138 of the third arm 122 are configured to have an interference fit with the tab 116 of the camera housing 106 when the camera housing 106 is connected to the mounting bracket 100. Further, the rearward tab 136 may engage the rear locking arm 114.

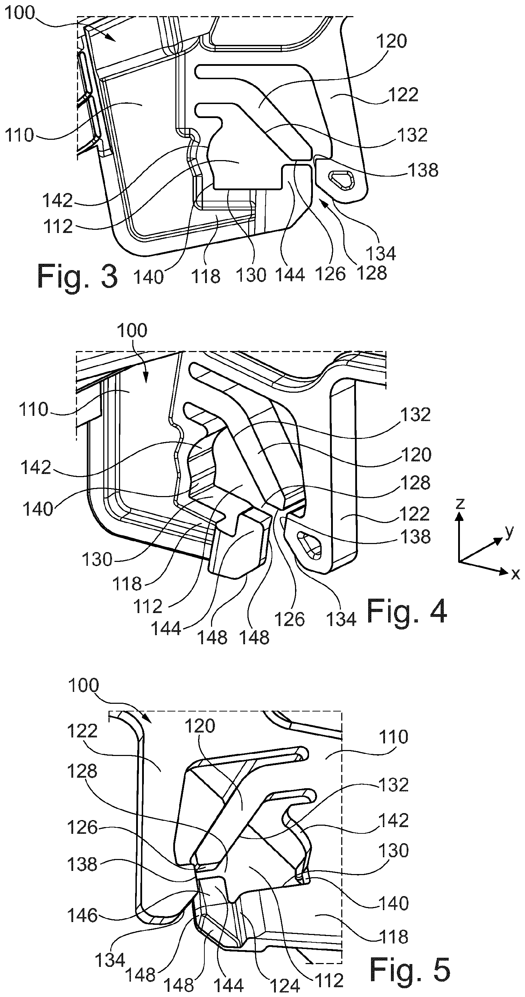

As shown in Figs. 3 to 7, the first arm 118 has a centering portion 144 configured to center the camera housing 106 relative to the mounting bracket 100. The centering portion 144 has a supporting surface 146 configured to support the tab 116 of the camera housing 106. The supporting surface 146 of the centering portion 144 extends transverse, in the present embodiment perpendicular, to the supporting surface 126 of the second arm 120 and to the supporting surface 138 of the third arm 122. Further, the centering portion 114 includes at least one guide surface 148. In the present embodiment, the centering portion 114 includes two guide surfaces 148 that are configured as lead-in chamfers to guide the tab 116 of the camera housing 106 into the channel 112.

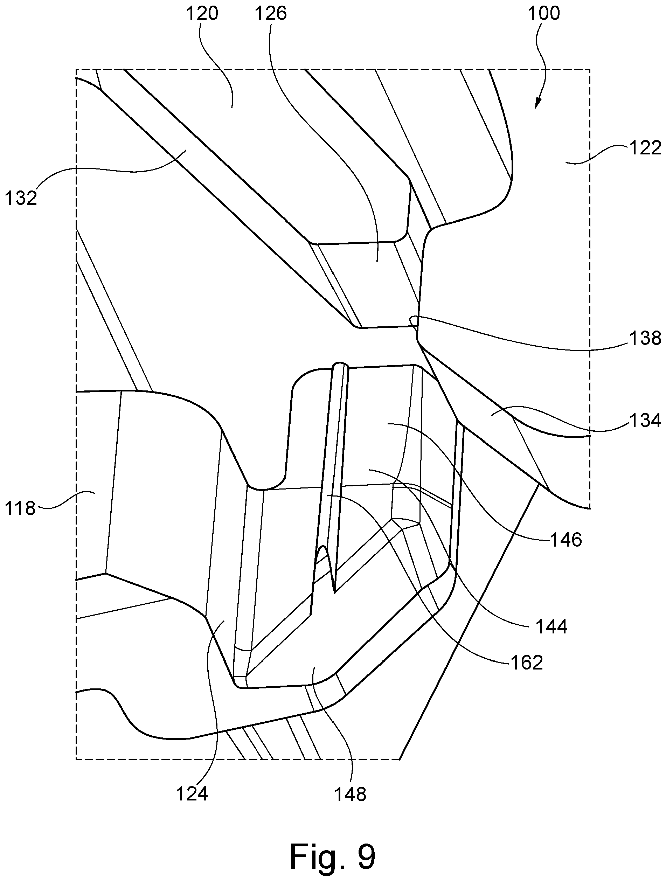

Moreover, as shown in Figs. 7 and 8, the tab 116 of the housing 106 has a substantially rectangular shape with an upper surface 150, a lower surface 152, a forward surface 156, a rearward surface 158, and a side surface 160. After pivoting the camera housing 106 and the tab 116 relative to the mounting bracket 100 and when the camera housing 106 is connected to the mounting bracket 100, the lower surface 152 of the tab 116 engages the supporting surface 130 of the first arm 118, the upper surface 150 engages the supporting surface 126 of the second arm 120, the forward surface 156 engages the supporting surface 140 of the sidewall 110, the rearward surface 158 engages the supporting surface 138 of the third arm 122, and the side surface 160 engages the supporting surface 146 of the centering portion 144. Thus, as illustrated in Figs. 7 and 8, a relatively tight fit, e.g., with a small interference between the second arm 120 and the tab 116 as well as between the third arm 122 and the tab 116, is realized for accommodating and constraining the tab 116 between the first arm 118 and second arm 120 and between the third arm 122 and the sidewall 110, after the camera housing 106 is locked in position. In addition, the camera housing 106 is centered in position by constraining two opposite tabs 116 of the camera housing 106 between two supporting surfaces 146 of opposite centering portions 144 of the mounting bracket 100. In this case, the two supporting surfaces 146 may face to each other and/or may be parallel to each other. Further, as shown in Fig. 9, at least one of the centering portions 144 or at least one of its supporting surfaces 146 may have a rib 162, preferably a crush rib 162. The rib 162 can be configured to have a tight and/or interference fit with the tab 116 of the camera housing 106 when the camera housing 106 is connected to the mounting bracket 100.

Finally, as shown in Figs. 7 and 8, the supporting surface 130 of the first arm 118 along with the second arm 120 and its supporting surface 126 limits, e.g. vertical, movements along direction Z, rotations around direction X and/or rotations around direction Y of the tab 116 and of the camera housing 106. The supporting surface 130 of the first arm 118 and/or the supporting surface 126 of the second arm 120 may thus function as a primary datum. Further, the supporting surface 140 of the sidewall 110 along with the third arm 122 and its supporting surface 138 limits movements along direction X and/or rotations around direction Z of the tab 116 and of the camera housing 106. The supporting surface 140 of the sidewall 110 and/or the supporting surface 138 of the third arm 122 may thus function as a secondary datum. Moreover, the supporting surfaces 146 of the centering portions 144 center the camera housing 106 relative to the mounting bracket 100 and limit movements along direction Y of the tab 116 and of the camera housing 106. The supporting surfaces 146 of the centering portions 144 may thus function as a tertiary datum.

The terms "may" and "can" refer in particular to optional features of the present disclosure. Accordingly, there are also further embodiments and/or embodiment examples of the present disclosure which additionally or alternatively have the respective feature or features.

If necessary, isolated features can also be selected from the feature combinations disclosed herein and used in combination with other features to define the claimed subject matter, while resolving any structural and/or functional relationship that may exist between the features.

It will thus be apparent that the present disclosure may be varied in many ways. Such variations are not to be regarded as a departure from the scope of the disclosure, and all modifications are intended to be included within the scope of the following claims.

### Reference signs

- 100: mounting bracket
- 102: driver assist system
- 104: mounting arrangement
- 106: camera housing
- 108: mounting portion
- 110: sidewall
- 112: channel
- 114: rear locking arm
- 116: tab of camera housing
- 118: first arm
- 120: second arm
- 122: third arm
- 124: end surface
- 126: supporting surface of second arm
- 128: insertion opening
- 130: supporting surface of first arm
- 132: guide surface of the second arm
- 134: guide surface of the third arm
- 136: rearward tab of camera housing
- 138: supporting surface of third arm
- 140: supporting surface of sidewall
- 142: curved surface
- 144: centering portion
- 146: supporting surface of centering portion
- 148: guide surfaces / lead-in chamfers of centering portion
- 150: upper surface of the tab
- 152: lower surface of the tab
- 156: forward surface of the tab
- 158: rearward surface of the tab
- 160: side surface of the tab
- 162: crush rib

## Claims

1. A mounting bracket (100) for a driver assist system (102), the mounting bracket (100) connectable with a vehicle and comprising:
a first arm (118) extending from a sidewall (110) of the mounting bracket (100);
a second arm (120) extending from the sidewall (110) of the mounting bracket (100); and
a channel (112) configured to receive a tab (116) of a camera housing (106), the channel (112) being at least partially defined by the first arm (118) and the second arm (120) , the first arm (118) having an end surface (124) and the second arm (120) having a supporting surface (126) to support the tab (116) of the camera housing (106), the end surface (124) of the first arm (118) and the supporting surface (126) of the second arm (120) at least partially defining an insertion opening (128) that faces generally downwardly, wherein the second arm (120) is configured to press the tab (116) of the camera housing (106) against a supporting surface (130) of the first arm (118) when the camera housing (106) is connected to the mounting bracket (100).

2. The mounting bracket (100) according to claim 1, comprising a third arm (122) extending from the sidewall (110) of the mounting bracket (100), the third arm (122) having a supporting surface (138) to support the tab (116) of the camera housing (106), wherein the third arm (122) is configured to press the tab (116) of the camera housing (106) against a supporting surface (140) of the sidewall (110) when the camera housing (106) is connected to the mounting bracket (100).

3. The mounting bracket (100) according to claim 2, wherein the supporting surface (138) of the third arm (122) and the supporting surface (140) of the sidewall (110) facing to each other.

4. The mounting bracket (100) according to claim 2 or 3, wherein the supporting surface (140) of the sidewall (110) extends transverse, in particular perpendicular, to the supporting surface (130) of the first arm (118).

5. The mounting bracket (100) according to at least one of the preceding claims 2 to 4, wherein the supporting surface (126) of the second arm (120) and the supporting surface (138) of the third arm (122) extend transverse, in particular perpendicular, to each other.

6. The mounting bracket (100) according to at least one of the preceding claims, wherein the second arm (120) and/or the third arm (122) is/are flexible.

7. The mounting bracket (100) according to at least one of the preceding claims, wherein the second arm (120) is a resilient element configured to apply a force to the tab (116) of the camera housing (106) to urge the tab (116) of the camera housing (106) against the supporting surface (130) of the first arm (118), and/or wherein the third arm (122) is a resilient element configured to apply a force to the tab (116) of the camera housing (106) to urge the tab (116) of the camera housing (106) against the supporting surface (140) of the sidewall (110).

8. The mounting bracket (100) according to at least one of the preceding claims, wherein the supporting surface (126) of the second arm (120) and/or the supporting surface (138) of the third arm (122) is/are configured to have an interference fit with the tab (116) of the camera housing (106) when the camera housing (106) is connected to the mounting bracket (100).

9. The mounting bracket (100) according to at least one of the preceding claims, wherein the sidewall (110) has a curved surface (142) facing toward the insertion opening (128).

10. The mounting bracket (100) according to claim 9, wherein the curved surface (142) extends from the supporting surface (140) on the sidewall (110).

11. The mounting bracket (100) according to at least one of the preceding claims, wherein the first arm (118) has a centering portion (144) configured to center the camera housing (106) relative to the mounting bracket (100).

12. The mounting bracket (100) according to claim 11, wherein the centering portion (144) has a rib (162) that is configured to have an interference fit with the tab (116) of the camera housing (106) when the camera housing (106) is connected to the mounting bracket (100), and/or wherein the centering portion (144) has a supporting surface (146) to support the tab (116) of the camera housing (106), wherein the supporting surface (146) of the centering portion (144) extends transverse, in particular perpendicular, to the supporting surface (126) of the second arm (120) and/or to the supporting surface (138) of the third arm (122).

13. The mounting bracket (100) according to at least one of the preceding claims, wherein the first arm (118) and/or the centering portion (144) has at least one guide surface (148), in particular configured as lead-in chamfer, wherein the at least one guide surface (148) is configured to guide the tab (116) of the camera housing (106) into the channel (112).

14. Mounting arrangement (104) for a driver assist system (102), the mounting arrangement (104) comprising a mounting bracket (100) according to at least one of the preceding claims; and
a camera housing (106) configured to mount a camera therein, the camera housing (106) having at least one tab (116), wherein the tab (116) of the camera housing (106) is slidable into the channel (112) in the mounting bracket (100) through the insertion opening (128) to connect the camera housing (106) to the mounting bracket (100), the camera housing (106) and the tab (106) being pivotal relative to the mounting bracket (100) after the tab (116) has slid into the channel (112), wherein the tab (116) at least engages the supporting surface (130) of the first arm (118) and the supporting surface (126) of the second arm (120) when the camera housing (106) is connected to the mounting bracket (100).

15. A vehicle driver assist system (102) comprising a mounting bracket (100) according to at least one of the preceding claims 1 to 13 or a mounting arrangement (104) according to claim 14.
